# EUROPEAN PATENT APPLICATION

(11) **EP 2 857 770 A1**
(43) Date of publication of application: **08.04.2015**
(21) Application number: 13784499.9
(22) Date of filing: 03.04.2013
(51) Int. Cl.: F24F 11/02

(54) **AIR CONDITIONING SYSTEM AND DEFROSTING OPERATION METHOD**

(30) Priority: 01.05.2012 JP 2012104594
(71) Applicant: Daikin Industries, Ltd., Osaka-shi, Osaka 530-8323 (JP)
(72) Inventor: WASA, Shigekazu, Osaka-shi Osaka 530-8323 (JP)
(74) Representative: Hoffmann Eitle
(86) International application number: PCT/JP2013/060151
(87) International publication number: WO 2013/164936

(57) **Abstract**

Temperature sensors detect an outdoor air temperature and a heat exchanger temperature of an outdoor unit, and a human detection sensor detects presence of a person in an air blowable region of each indoor unit. A control section selectively executes a first defrosting operation mode in which a defrosting operation is performed while fans of all the indoor units are stopped, and a second defrosting operation mode in which, when a frost formation amount in the heat exchanger is estimated to exceed a threshold value on the basis of the temperatures detected by the first and second temperature sensors, the indoor unit for which the human detection sensor detects no person in its air blowable region is preferentially selected, and a defrosting operation is performed while the fan of the indoor unit is forcibly operated. Such an air conditioning system and a defrosting operation method reduce time required for defrosting.

## Description

### TECHNICAL FIELD

The present invention relates to an air conditioning system with use of an air conditioner, and particularly, relates to a defrosting operation for removing frost formed in a heat exchanger of an outdoor unit.

### BACKGROUND ART

When an air conditioner performs a heating operation, in a cold area, frost may be formed in a heat exchanger of an outdoor unit, and the frost formation amount may be great. Since frost formation hinders heat exchange, it is necessary to perform a defrosting operation (for example, see Patent Literature 1).

### CITATION LIST

### [PATENT LITERATURE]

PATENT LITERATURE 1: Japanese Laid-Open Patent Publication No. 2010-96474

### SUMMARY OF INVENTION

### [TECHNICAL PROBLEM]

However, in the case where the outdoor air temperature is very low, a conventional air conditioner as described above may have difficulty removing frost by a defrosting operation. Since heating cannot be performed during the defrosting operation, it is desirable to complete the defrosting as quickly as possible.

Considering the above problems, an object of the present invention is to provide an air conditioning system and a defrosting operation method that can reduce time required for defrosting.

### [SOLUTION TO PROBLEM]

(1) An air conditioning system of the present invention includes: a plurality of indoor units; an outdoor unit sharing a refrigerant system with the plurality of indoor units; a first temperature sensor configured to detect an outdoor air temperature; a second temperature sensor configured to detect a temperature of a heat exchanger of the outdoor unit; a human detection sensor configured to detect whether or not there is a person in an air blowable region of each indoor unit; and a control section configured to selectively execute a first defrosting operation mode and a second defrosting operation mode, the first defrosting operation mode being a mode in which a defrosting operation is performed while fans of all the indoor units are stopped, and the second defrosting operation mode being a mode in which, when it is estimated that a frost formation amount in the heat exchanger exceeds a threshold value on the basis of the respective temperatures detected by the first and second temperature sensors, the indoor unit for which the human detection sensor detects no person in the air blowable region thereof is preferentially selected, and a defrosting operation is performed while the fan of the indoor unit is forcibly operated.

In the air conditioning system configured as described above, when it is estimated that the frost formation amount in the heat exchanger exceeds the threshold value, the defrosting operation is performed while the fan of at least one indoor unit is forcibly operated. By operating the fan, heat exchange between the indoor air and the refrigerant is promoted, so that the defrosting is further swiftly performed. In addition, although cold air is blown into the room by the operation of the fan, there is no fear that discomfort (feeling cold) is given as long as there is no person in the air blowable region.

(2) In addition, in the air conditioning system of the above (1), the control section may determine whether or not the forcible operation needs to be strengthened, on the basis of the temperature detected by the second temperature sensor after a certain time has elapsed since the execution of the second defrosting operation mode has been started, and only when the forcible operation needs to be strengthened, may increase at least one of a revolution speed of the fan and the number of indoor units whose fans are operated.

For example, in the case where the temperature of the heat exchanger does not become higher than a predetermined value even after the certain time has elapsed since the execution of the second defrosting operation mode has been started, that is, in the case where progress of the defrosting is slow because the frost formation amount is great, at least one of the revolution speed of the fan and the number of indoor units whose fans are operated is increased, whereby heat exchange between the indoor air and the refrigerant is further promoted. Thus, defrosting in the case of great frost formation amount can be swiftly performed.

(3) In addition, in the air conditioning system of the above (1) or (2), the outdoor unit may be provided with a setting switch for allowing use of the second defrosting operation mode.

In this case, use of the second defrosting operation mode can be easily allowed by an operation on the setting switch. In addition, if a user does not desire the second defrosting operation mode, the setting can be easily cancelled.

(4) In addition, in the air conditioning system of the above (1), in the case where at least two systems of a first system and a second system each including the indoor units, the outdoor unit, and the first and second temperature sensors are provided and the indoor units of the two systems are provided in a mixed manner in one room, when executing the second defrosting operation mode in the first system, the control section may operate the fans of the indoor units in the room with the second system set at a heating operation.

In this case, when there is a person in the room, since warm air can be blown from the indoor units of the second system though cold air is blown from the indoor units of the first system, it is possible to neutralize (or alleviate) discomfort due to blow of cold air, in the room as a whole.

(5) Another aspect of the present invention is a defrosting operation method performed in an air conditioning system including a plurality of indoor units and an outdoor unit sharing a refrigerant system with the plurality of indoor units, the defrosting operation method including: (a) detecting an outdoor air temperature and a temperature of a heat exchanger of the outdoor unit by respective temperature sensors; (b) detecting whether or not there is a person in an air blowable region of each indoor unit by a human detection sensor; and (c) selectively executing, by a control section, a first defrosting operation mode and a second defrosting operation mode, the first defrosting operation mode being a mode in which a defrosting operation is performed while fans of all the indoor units are stopped, and the second defrosting operation mode being a mode in which, when it is estimated that a frost formation amount in the heat exchanger exceeds a threshold value on the basis of the respective temperatures detected by the first and second temperature sensors, the indoor unit for which the human detection sensor detects no person in the air blowable region thereof is preferentially selected, and a defrosting operation is performed while the fan of the indoor unit is forcibly operated.

In the defrosting operation method as described above, when it is estimated that the frost formation amount in the heat exchanger exceeds the threshold value, the defrosting operation is performed while the fan of at least one indoor unit is forcibly operated. By operating the fan, heat exchange between the indoor air and the refrigerant is promoted, so that the defrosting is further swiftly performed. In addition, although cold air is blown into the room by the operation of the fan, there is no fear that discomfort (feeling cold) is given as long as there is no person in the air blowable region.

### [ADVANTAGEOUS EFFECTS OF INVENTION]

The air conditioning system or the defrosting operation method of the present invention can reduce time required for defrosting.

### BRIEF DESCRIPTION OF DRAWINGS

FIG. 1 is a configuration diagram of an air conditioning system according to the first embodiment of the present invention.
FIG. 2 is a diagram showing the schematic configuration of an outdoor unit.
FIG. 3 is a flowchart showing a procedure of a defrosting operation method of the present embodiment performed by a control section of the outdoor unit.
FIG. 4 is a diagram showing the case where a fan of one indoor unit is operated when a person is present in a region for a certain indoor unit, in the same configuration diagram as in FIG. 1.
FIG. 5 is a diagram showing the case where fans of two indoor units are operated when a person is present in a region for a certain indoor unit, in the same configuration diagram as in FIG. 1.
FIG. 6 is a configuration diagram of an air conditioning system according to the second embodiment of the present invention.

### DESCRIPTION OF EMBODIMENTS

### «First embodiment»

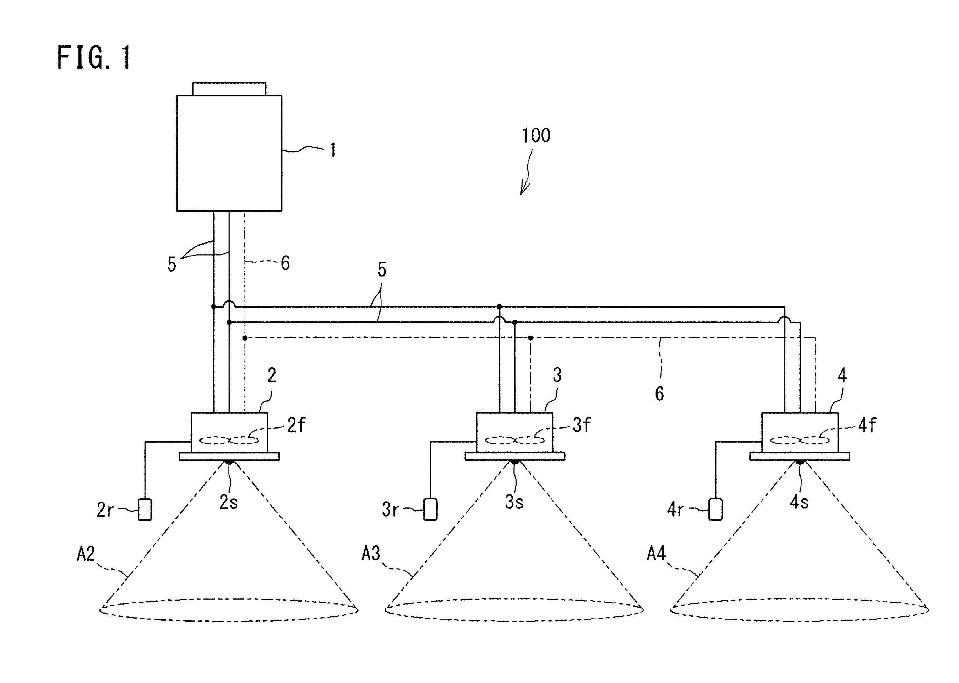

FIG. 1 is a configuration diagram of an air conditioning system according to the first embodiment of the present invention. In FIG. 1, in the air conditioning system 100, one outdoor unit 1 and a plurality of (three) indoor units 2, 3, and 4 are connected via a refrigerant pipe 5, thereby sharing a refrigerant system. In addition, the outdoor unit 1 and the indoor units 2, 3, and 4 are connected to each other via a communication line 6. Remote controllers 2r, 3r, and 4r for operation are respectively connected to the indoor units 2, 3, and 4. The indoor units 2, 3, and 4 respectively have fans 2f, 3f, and 4f therein.

The number of the indoor units is merely an example. In addition, although one outdoor unit 1 is provided, a plurality of outdoor units may be provided as necessary. In addition, a power line is not shown in the drawings.

The indoor units 2, 3, and 4 are provided with human detection sensors 2s, 3s, and 4s, respectively. The human detection sensors 2s, 3s, and 4s are, for example, pyroelectric infrared sensors, and can detect infrared light emitted by a person present in an air blowable region A2, A3, or A4 of the indoor unit 2, 3, or 4, thereby recognizing presence or absence of a person. In the drawings, a simple circular (conical) region is shown for simplification.

In practice, in accordance with expansion of the air blowable region of each indoor unit, a plurality of human detection sensors may be provided per indoor unit such that detection target regions of these sensors are shifted from each other, so as to allow these sensors as a whole to detect a wide range.

The human detection sensors 2s, 3s, and 4s may not be necessarily provided on housings of the indoor units 2, 3, and 4 as accessories thereof. For example, the human detection sensors 2s, 3s, and 4s may be provided on a ceiling of a room, and their outputs may be transmitted to the indoor units 2, 3, and 4 or the outdoor unit 1. In addition, in the case where the indoor units 2, 3, and 4 are provided in separate rooms, whether or not there is a person in each room instead of the air blowable region may be detected.

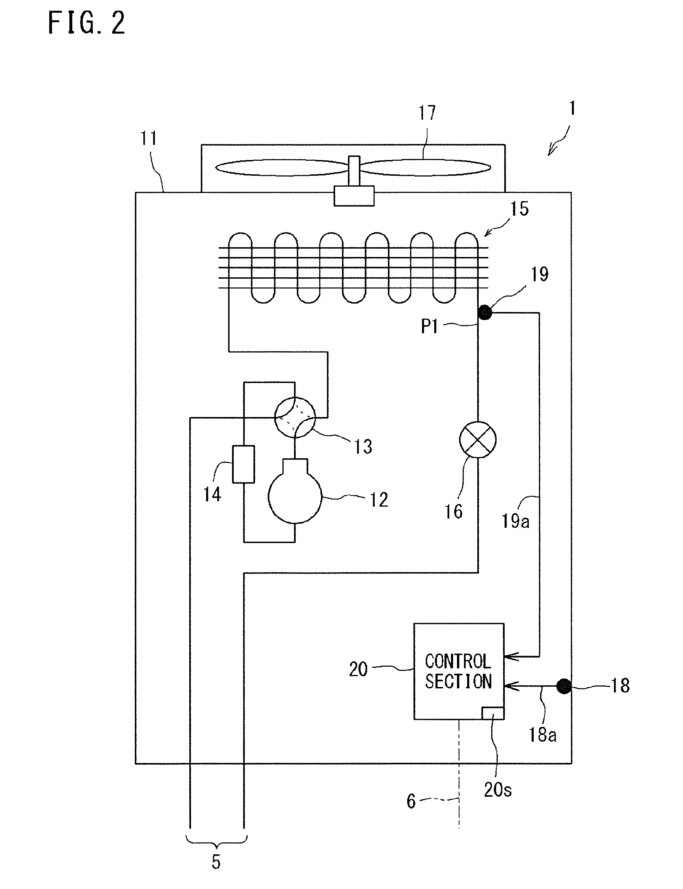

FIG. 2 is a diagram showing the schematic configuration of the outdoor unit 1. The outdoor unit 1 has, in a housing 11, a compressor 12, a four way valve 13, an accumulator 14, a heat exchanger 15, an expansion valve 16, a fan 17, temperature sensors 18 and 19, and a control section 20. The temperature sensor 19 is, for example, a thermistor, and is attached in contact with a refrigerant tube P1 at an end of the heat exchanger 15. The temperature sensor 19 detects a temperature Tb at the end of the heat exchanger 15 which is the low-temperature side (hereinafter, simply referred to as a temperature of the heat exchanger 15). When the outdoor unit 1 is performing operation without frost formation in the heat exchanger 15, the temperature detected by the temperature sensor 19 is almost constant. On the other hand, the temperature sensor 18 is, for example, a thermistor, and detects the temperature of outdoor air taken in by operation of the fan 17.

The temperature sensors 18 and 19 are connected to the control section 20 via cables 18a and 19a, respectively. The control section 20 has a CPU and other central control functions, thereby controlling each actuator (the compressor 12, the four way valve 13, the expansion valve 16, the fan 17, etc.) in the outdoor unit 1 and the indoor units 2 to 4.

In addition, the control section 20 is provided with a setting switch 20s. By operating the setting switch 20s, either the case of using only a first defrosting operation mode or the case of selectively using first and second defrosting operation modes as described later can be selected as appropriate in accordance with a user's desire, for example.

In FIG. 2, in a cooling operation, the four way valve 13 becomes a state indicated by a solid line in the drawing, and a high-pressure gas refrigerant ejected from the compressor 12 is subjected to heat exchange with outdoor air by the heat exchanger 15, and is thereby condensed to be a liquid refrigerant. The liquid refrigerant is decompressed by the expansion valve 16, and then sent to the indoor units 2 to 4 (FIG. 1). After evaporation by heat exchange with indoor air in the indoor units 2 to 4, the gas refrigerant returns to the outdoor unit 1, passes through the four way valve 13 and the accumulator 14, and then is sent to the compressor 12. The cooling operation is performed through repetition of such a cycle.

In a heating operation, the four way valve 13 becomes a state indicated by a dotted line in the drawing, and a high-pressure gas refrigerant ejected from the compressor 12 is sent to the indoor units 2, 3, and 4 (FIG. 1), in which the gas refrigerant is subjected to heat exchange with indoor air and is thereby condensed to be a liquid refrigerant. The liquid refrigerant returns to the outdoor unit 1 and is decompressed by the expansion valve 16. Thereafter, the liquid refrigerant is subjected to heat exchange with outdoor air by the heat exchanger 15, and is thereby evaporated. After the evaporation, the gas refrigerant passes through the four way valve 13 and the accumulator 14 and then is sent to the compressor 12. The heating operation is performed through repetition of such a cycle.

When a heating operation is performed at a low outdoor temperature, frost may be formed in the heat exchanger 15 of the outdoor unit 1. If the formed frost is left to grow, the heating efficiency is deteriorated. Therefore, the heating operation is temporarily stopped and a defrosting operation is performed. Flow of a refrigerant in the defrosting operation is the same as in the cooling operation. At this time, conventionally, the fans of the indoor units 2 to 4 are stopped so that cold air does not flow out into the room.

The above defrosting operation can be performed based on the temperature Tb of the heat exchanger 15 in the outdoor unit 1, for example. In a normal heating operation, the temperature Tb of the heat exchanger 15 is kept substantially at a constant value To as long as there is no frost formation. However, as the frost formed in the heat exchanger 15 gradually increases while the heating operation is continued, the temperature Tb of the heat exchanger 15 gradually decreases. Then, when the temperature Tb detected by the temperature sensor 19 further decreases by more than a temperature decrease width ΔT from the above To, that is, in the case of Tb < (To - ΔT), it is determined that the frost formation amount in the heat exchanger 15 has become equal to or greater than a reference frost formation amount. The reference frost formation amount is a frost formation amount "just before" the efficiency of the heat exchanger 15 reduces and a problem occurs on the heating operation unless defrosting is performed.

It is noted that the defrosting operation may be set so as to be finished when the temperature Tb of the heat exchanger 15 has increased to To, for example.

In addition, as a trigger for start and finish other than the above start and finish of the defrosting operation, for example, under a predetermined outdoor air temperature condition, when a heating operation has been continuously performed for a certain time, it may be estimated that frost formation has occurred, and a defrosting operation may be automatically performed. In addition, when the defrosting operation has performed for a certain time, it may be estimated that defrosting has been completed, and the defrosting operation may be automatically finished.

The air conditioning system 100 of the present embodiment executes an advanced defrosting operation, besides the normal defrosting operation as described above. Hereinafter, the advanced defrosting operation method will be described in detail.

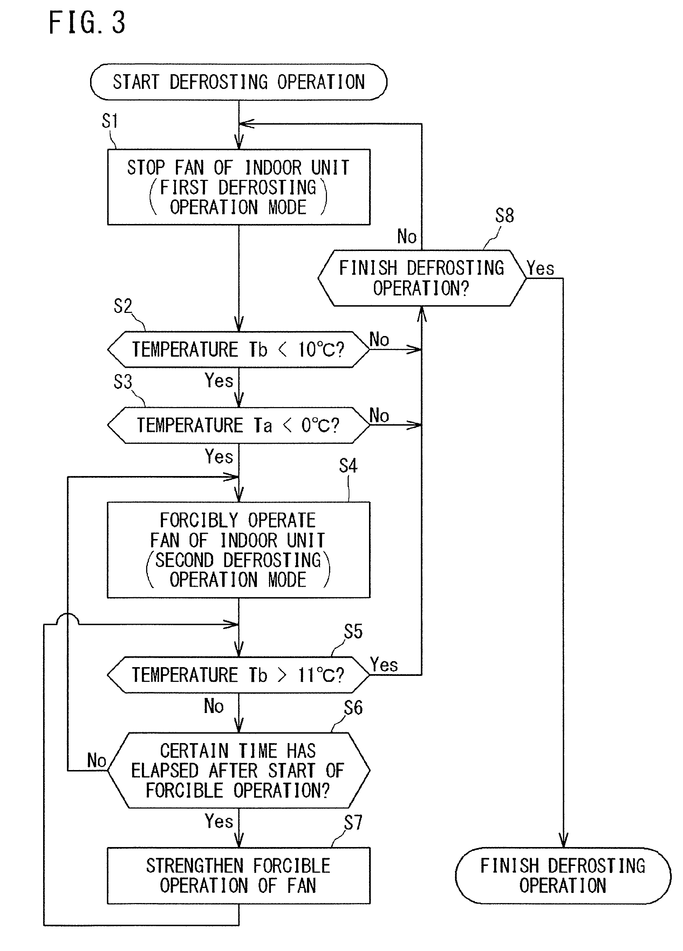

FIG. 3 is a flowchart showing a procedure of the defrosting operation method of the present embodiment performed by the control section 20 of the outdoor unit 1. It is noted that instructions to start and finish the defrosting operation are performed in the above manner, and therefore they are shown in a simplified manner in the flowchart. That is, the flowchart mainly shows selective use of two modes in the defrosting operation.

When a defrosting operation is started, the control section 20 stops all the fans of the indoor units 2 to 4 (step S1). This is a normal defrosting operation and is referred to as a first defrosting operation mode.

Next, the control section 20 determines whether or not the temperature Tb of the heat exchanger 15 is lower than 10°C (step S2). Here, if the temperature Tb is equal to or higher than 10°C, it can be estimated that the frost formation amount is comparatively small. Therefore, the control section 20 continues the first defrosting operation mode until the defrosting operation is finished (steps S1, S2, and S8 are repeated). If an instruction to finish the defrosting operation is issued in step S8, the defrosting operation is finished.

On the other hand, if the temperature Tb of the heat exchanger 15 is lower than 10°C, the control section 20 determines whether or not a temperature Ta of the outdoor air detected by the temperature sensor 19 is lower than 0°C (step S3). Here, if the temperature Ta is equal to or higher than 0°C, it can be estimated that the frost formation amount is comparatively small. Therefore, the control section 20 continues the first defrosting operation mode until the defrosting operation is finished (steps S1, S2, S3, and S8 are repeated). If an instruction to finish the defrosting operation is issued in step S8, the defrosting operation is finished.

On the other hand, in step S3, if the temperature Ta of the outdoor air is lower than 0°C, that is, two conditions of Tb < 10°C and Ta < 0°C are satisfied in a logic of AND, the control section 20 estimates that the frost formation amount exceeds a threshold value, and executes a second defrosting operation mode (step S4). It is noted that the threshold value of the frost formation amount is greater than the above-described reference frost formation amount.

In the second defrosting operation mode, the fans of one or more of the indoor units 2 to 4 are forcibly operated. By operating the fans, heat exchange between the indoor air and the refrigerant is promoted, so that the defrosting is further swiftly performed. The more the number of the indoor units whose fans are operated, the more swiftly the defrosting can be performed. In addition, under the same number of the indoor units whose fans are operated, the more the air blow amount is, the more swiftly the defrosting can be performed.

However, since the defrosting operation uses the same refrigerant cycle as the cooling operation, a cold air is blown into the room when the fans are operated. In this case, a person at a position to which the cold air is blown will feel cold and uncomfortable.

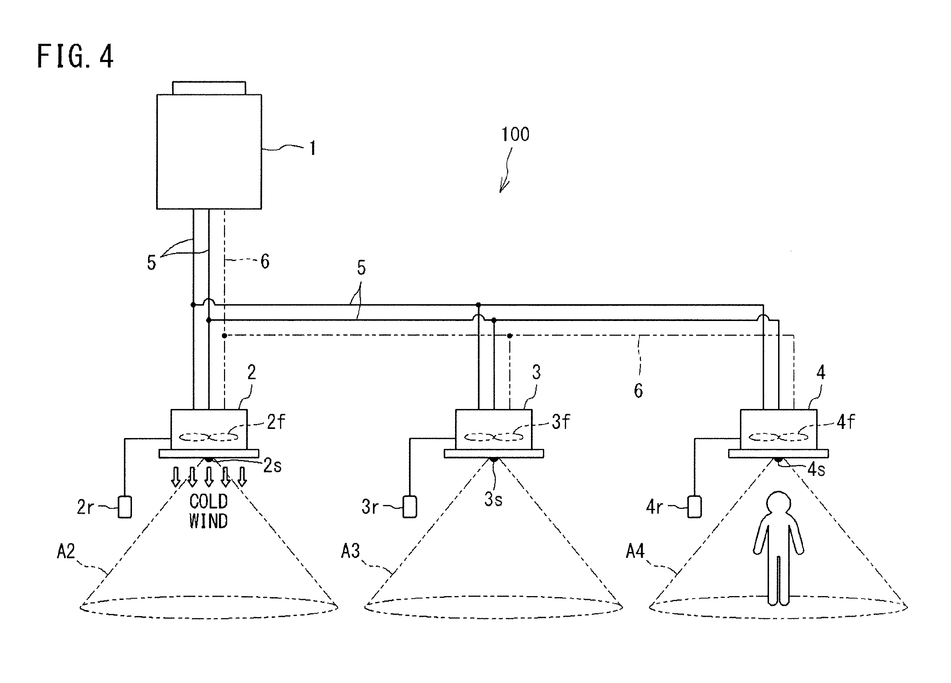

FIG. 4 is the same diagram as in FIG. 1, showing the case where there is a person in a region A4 of the indoor unit 4. In this case, the presence of the person is detected by the human detection sensor 4s. The detected signal is transmitted to the control section 20 of the outdoor unit 1. On the other hand, if there is no person in regions A2 and A3 of the indoor units 2 and 3, no detected signal is transmitted from the human detection sensors 2s and 3s. Accordingly, the control section 20 preferentially selects and operates the fans 2f and 3f of the indoor units 2 and 3 which detect no person in their air blowable regions.

FIG. 4 shows the case where the fan 2f of the indoor unit 2 is operated, as an example. Although cold air is blown to the region A2 by the operation of the fan 2f, there is no person in that region and therefore no person feels uncomfortable.

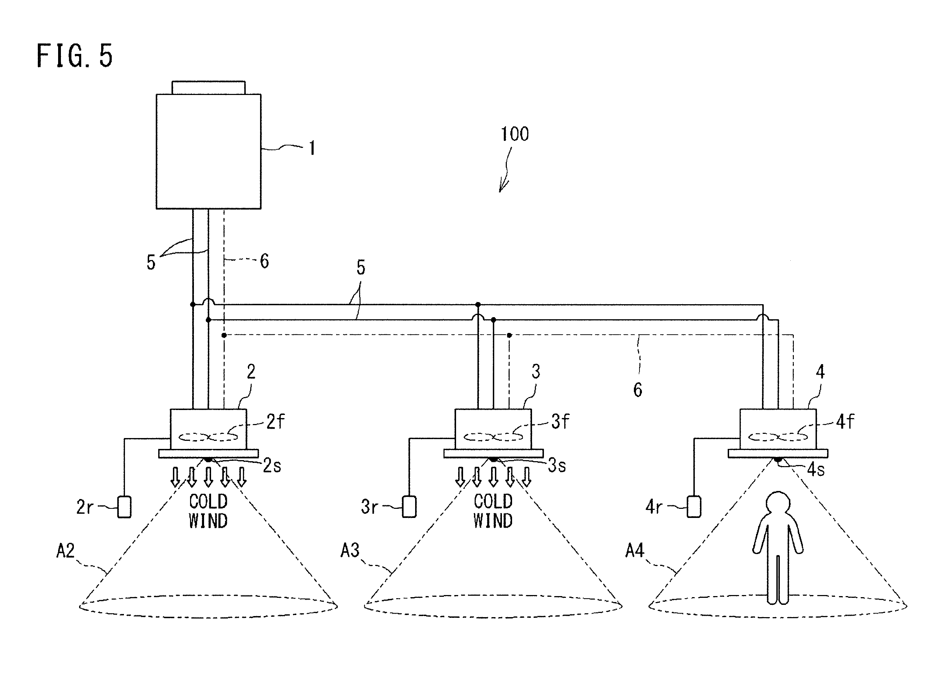

FIG. 5 shows the case where the fans 2f and 3f of the indoor units 2 and 3 are operated. Although cold air is blown to the regions A2 and A3 by the operation of the fans 2f and 3f, there is no person in those regions and therefore no person feels uncomfortable.

Returning to FIG. 3, while executing the second defrosting operation mode, the control section 20 waits for the temperature of the heat exchanger 15 to become higher than 11 °C during a certain time after the forcible operation of the fans has been started (return from steps S5 and S6 to step S4 is repeated). The temperature 11 °C is a temperature at which it is determined that the frost formation amount has become smaller than the threshold value as a result of the defrosting operation in the second defrosting operation mode and therefore the first defrosting operation mode is sufficient. The reason why a difference by 1°C from 10°C in step S2 is provided is to avoid hunting of the operation mode behavior and to ensure that the frost formation amount is decreased enough to return to the first defrosting operation mode.

If the temperature of the heat exchanger 15 has become higher than 11 °C before the certain time elapses, the process returns through step S8 to step S1, and thereafter, the control section 20 continues the first defrosting operation mode until the defrosting operation is finished (steps S1, S2, and S8 are repeated). If an instruction to finish the defrosting operation is issued in step S8, the defrosting operation is finished.

On the other hand, in step S6, if the certain time has elapsed after the forcible operation has been started without the temperature of the heat exchanger 15 becoming higher than 11°C, the control section 20 strengthens the forcible operation (step S7). This is performed by increasing the above-described number of the indoor units whose fans are operated and/or increasing the air blow amount, i.e., the revolution speed of each fan. Thus, the defrosting can be swiftly performed.

It is noted that in the above air conditioning system/defrosting operation method, the fan of the indoor unit for which there is a person in the air blowable region thereof is not a target of preferential operation, so that it is desirable to avoid the operation thereof. However, this does not mean that the operation must not be performed. If a user allows cold air to be blown for swift defrosting, the fans of all the indoor units may be operated irrespective of presence or absence of a person, whereby the defrosting can be further swiftly performed.

Since the setting switch 20s (FIG. 2) for allowing use of the second defrosting operation mode is provided on the outdoor unit 1, use of the second defrosting operation mode can be easily allowed by an operation on the setting switch 20s at the time of installation or maintenance. In addition, if a user does not desire the second defrosting operation mode, the setting can be easily cancelled.

It is noted that the specific values used for the conditions for executing the second defrosting operation mode (steps S2 and S3 in FIG. 3) and the condition for finishing the second defrosting operation mode (step S5) in the above embodiment are merely examples, and may be slightly changed as appropriate depending on the use environment.

### «Second embodiment»

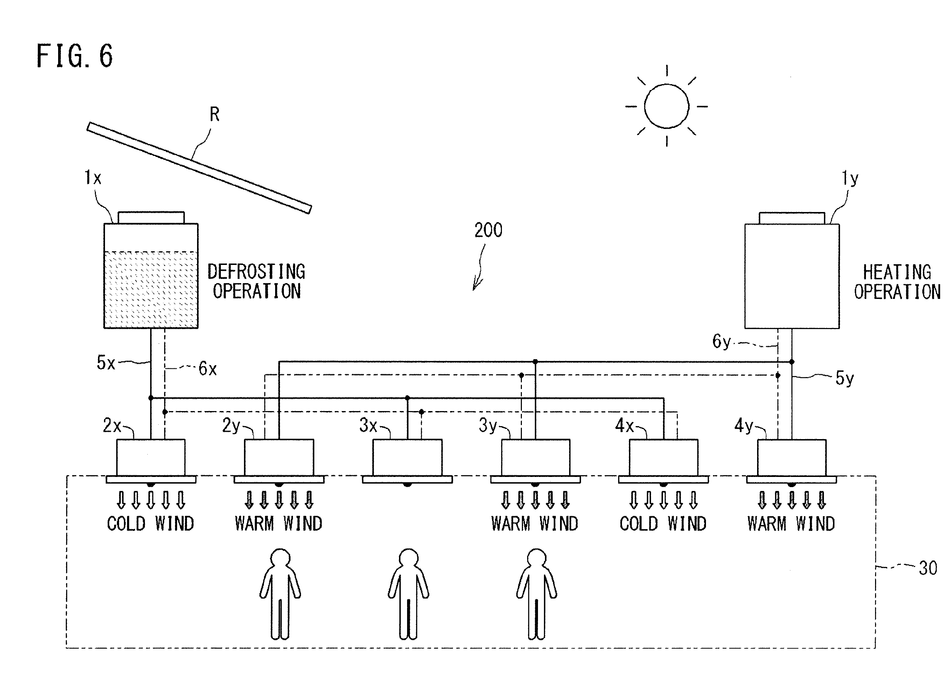

FIG. 6 is a configuration diagram of an air conditioning system according to the second embodiment of the present invention. In FIG. 6, the air conditioning system 200 has two separate refrigerant systems. In the case where the two systems are an X system and a Y system, the X system includes one outdoor unit 1x and a plurality of (three) indoor units 2x, 3x, and 4x, which are connected via a refrigerant pipe 5x, thereby sharing a refrigerant system. In addition, the outdoor unit 1x and the indoor units 2x, 3x, and 4x are connected to each other via a communication line 6x.

In addition, the Y system includes one outdoor unit 1y and a plurality of (three) indoor units 2y, 3y, and 4y, which are connected via a refrigerant pipe 5y, thereby sharing a refrigerant system. In addition, the outdoor unit 1y and the indoor units 2y, 3y, and 4y are connected to each other via a communication line 6y.

It is noted that the number of the indoor units in each system is merely an example. In addition, although one outdoor unit 1x and one outdoor unit 1y are provided, a plurality of outdoor units 1x or a plurality of outdoor units 1y may be provided as necessary.

A space as an air conditioning target is, for example, one broad room 30 such as one floor of a building, and has no partition wall. In addition, for example, the outdoor unit 1x at the left is provided under a roof R and does not receive much sunshine. Therefore, for example, at a low temperature that is lower than 0°C, frost formation easily occurs even in a good weather, and the frost formation amount is likely to be great. On the other hand, the outdoor unit 1y at the right is provided at a place that receives sunshine in the daytime, so that frost formation hardly occurs or even if frost formation occurs, the amount thereof is comparatively small.

The other detailed configuration is the same as in the first embodiment.

In the air conditioning system 200 of the second embodiment as described above, a state can frequently occur in which frost is formed in the outdoor unit 1x and a defrosting operation is needed but the outdoor unit 1y does not need a defrosting operation. In such a case, for example, the X system can perform a defrosting operation and the Y system can perform a heating operation.

The defrosting operation method can be performed in the manner shown in the flowchart in FIG. 3, as in the first embodiment. Although cold air is preferentially blown to a space in which there is no person as in the above case, the cold air can flow convectively because the room is one floor. However, since warm air can be blown from the indoor units (2y, 3y, and 4y) of the Y system though cold air is blown from the indoor units (for example, 2x and 4x) of the X system, it is possible to neutralize (or alleviate) discomfort due to blow of cold air, in the room as a whole. The fan of the indoor unit 3x is not operated because there is a person in the air blowable region thereof.

Although the configuration in FIG. 6 has two systems, three or more systems may be provided in a mixed manner. In this case, only one system may execute the second defrosting operation mode as necessary while the other two or more systems perform heating operations, whereby discomfort due to blow of cold air can be further alleviated in the room as a whole.

### REFERENCE SIGNS LIST

- 1: outdoor unit
- 2 (2x, 2y), 3 (3x, 3y), 4 (4x, 4y): indoor unit
- 2f, 3f, 4f: fan
- 2s, 3s, 4s: human detection sensor
- 15: heat exchanger
- 18, 19: temperature sensor
- 20: control section
- 20s: setting switch
- 100, 200: air conditioning system

## Claims

1. An air conditioning system comprising:
a plurality of indoor units (2,3,4);
an outdoor unit (1) sharing a refrigerant system with the plurality of indoor units (2, 3, 4);
a first temperature sensor (18) configured to detect an outdoor air temperature;
a second temperature sensor (19) configured to detect a temperature of a heat exchanger (15) of the outdoor unit (1);
a human detection sensor (2s, 3s, 4s) configured to detect whether or not there is a person in an air blowable region of each indoor unit (2, 3, 4); and
a control section (20) configured to selectively execute a first defrosting operation mode and a second defrosting operation mode, the first defrosting operation mode being a mode in which a defrosting operation is performed while fans (2f, 3f, 4f) of all the indoor units are stopped, and the second defrosting operation mode being a mode in which, when it is estimated that a frost formation amount in the heat exchanger (15) exceeds a threshold value on the basis of the respective temperatures detected by the first and second temperature sensors (18, 19), the indoor unit for which the human detection sensor (2s, 3s, 4s) detects no person in the air blowable region thereof is preferentially selected, and a defrosting operation is performed while the fan of the indoor unit is forcibly operated.

2. The air conditioning system according to claim 1, wherein the control section (20) determines whether or not the forcible operation needs to be strengthened, on the basis of the temperature detected by the second temperature sensor (19) after a certain time has elapsed since the execution of the second defrosting operation mode has been started, and only when the forcible operation needs to be strengthened, increases at least one of a revolution speed of the fan and the number of indoor units whose fans are operated.

3. The air conditioning system according to claim 1 or 2, wherein the outdoor unit (1) is provided with a setting switch (20s) for allowing use of the second defrosting operation mode.

4. The air conditioning system according to claim 1, wherein
in the case where at least two systems of a first system and a second system each including the indoor units (2, 3, 4), the outdoor unit (1), and the first and second temperature sensors (18, 19) are provided and the indoor units (2x, 2y, 3x, 3y, 4x, 4y) of the two systems are provided in a mixed manner in one room,
when executing the second defrosting operation mode in the first system, the control section (20) operates the fans of the indoor units in the room with the second system set at a heating operation.

5. A defrosting operation method performed in an air conditioning system (100) including a plurality of indoor units (2, 3, 4) and an outdoor unit (1) sharing a refrigerant system with the plurality of indoor units, the defrosting operation method comprising:
detecting an outdoor air temperature and a temperature of a heat exchanger (15) of the outdoor unit by respective temperature sensors (18, 19);
detecting whether or not there is a person in an air blowable region of each indoor unit (2, 3, 4) by a human detection sensor (2s, 3s, 4s); and
selectively executing, by a control section (20), a first defrosting operation mode and a second defrosting operation mode, the first defrosting operation mode being a mode in which a defrosting operation is performed while fans (2f, 3f, 4f) of all the indoor units (2, 3, 4) are stopped, and the second defrosting operation mode being a mode in which, when it is estimated that a frost formation amount in the heat exchanger (15) exceeds a threshold value on the basis of the respective temperatures detected by the first and second temperature sensors (18, 19), the indoor unit for which the human detection sensor (2s, 3s, 4s) detects no person in the air blowable region thereof is preferentially selected, and a defrosting operation is performed while the fan of the indoor unit is forcibly operated.
